# EUROPEAN PATENT SPECIFICATION

(11) **EP 2 495 817 B1**
(45) Date of publication and mention of the grant of the patent: **14.11.2018**
(21) Application number: 12001017.8
(22) Date of filing: 16.02.2012
(51) Int. Cl.: H01R 9/22, H02K 5/20, H02K 5/22, H02K 9/19, H01R 4/30

(54) **Terminal block, motor provided therewith and method of mounting a terminal block**
Reihenklemme, Motor damit und Verfahren zur Montage einer Reihenklemme
Bornier, moteur fourni avec celui-ci et procédé de montage d'un bornier

(30) Priority: 03.03.2011 JP 2011046481
(43) Date of publication of application: 05.09.2012
(73) Proprietor: Sumitomo Wiring Systems, Ltd., Yokkaichi-city, Mie 510-8503 (JP)
(72) Inventor: Akuta, Daisuke, Yokkaichi-City Mie 510-8503 (JP)
(74) Representative: Müller-Boré & Partner Patentanwälte PartG mbB

(56) References cited:
- JP-A- 2008 098 007
- US-A1- 2007 218 721
- US-A1- 2010 139 896

## Description

The present invention relates to a terminal block, to a motor provided therewith and to a method of mounting a terminal block to a motor.

A terminal block for electrically connecting conductive members such as busbars extending from electric devices such as a motor and an inverter is conventionally known from Japanese Unexamined Patent Publication No. 2008-98007. This terminal block electrically connects the conductive members of respective electric devices by placing the conductive members one over another on a terminal block body formed by insert molding to include metal nuts in the terminal block and fastening them by fastening bolts and the nuts.

Since the electric devices generally have a large amount of heat generation and heat is transferred to the conductive members from the electric devices, the terminal block connected to the conductive members becomes hot. Further, since the conductive members themselves generate heat when a large current flows thereinto, the terminal block becomes even hotter. Accordingly, this terminal block is of a so-called air-cooled type that a metal heat sink is arranged below the nuts via an insulating member in the form of a flat plate made of synthetic resin and heat transferred to the nuts from the conductive members is transferred to the heat sink via the insulating member and radiated to the atmosphere by a heat radiation fin provided in the heat sink.

However, in the air-cooled type terminal block that radiates heat by the heat radiation fin, heat is likely to stay in a space between the heat radiation fin of the heat sink and a motor case to which the terminal block is fixed, and heat radiation tends to be lower.

Accordingly, it is being attempted to form the bottom surface of the heat sink to be flat, attach a heat radiation sheet to the bottom surface and fix the heat sink to the cooled motor case via the heat radiation sheet. According to such a construction, heat of the heat sink is likely to be transferred to the cooled motor case via the heat radiation sheet, whereby heat radiation can be improved.

However, by a method for radiating heat by utilizing the heat radiation sheet and fixing the terminal block to the motor case, the heat radiation sheet needs to be attached in mounting the terminal block, wherefore the number of members increases to deteriorate mass productivity. Further, the terminal block cannot be cooled to a temperature lower than the surface temperature of the motor case, and a heat radiation effect is insufficient when the amount of heat generation is large. Thus, further improvement has been desired.

From document US 2010/0139896, there is known an electric machine including a housing having an outer surface and an inner surface that defines an interior portion. The housing includes a connection zone. A fluid circuit passes through the housing and includes an inlet portion and an outlet portion. A stator assembly is arranged within the interior portion of the housing and includes a terminal block extending through the housing. The terminal block includes a non-electrically conductive member that is sealed against the housing. The non-electrically conductive member includes a fluid cavity. An electrically conductive member is covered, at least in part, by the non-electrically conductive member. The fluid cavity guides a fluid along a portion of the electrically conductive member to absorb heat.

The present invention was completed in view of the above situation and an object thereof is to improve heat radiation performance of a heat sink without increasing the number of members.

This object is solved according to the invention by the features of the independent claims. Preferred embodiments of the invention are subject of the dependent claims. According to one aspect of the present invention there is provided a terminal block as defined in independent claim 1.

According to the thus constructed terminal block, since the heat radiating portion can be directly cooled (heat exchange) by the coolant in the coolant flow path, a heat radiation effect from the heat sink can be improved as compared with heat radiation via a heat transfer member such as a heat radiation sheet and air-cooled heat radiation. Thus, an effect of radiating heat transferred from the conductive members can be improved.

The present invention is preferably embodied to have the following constructions.

The heat radiating portion may be formed to extend substantially along the flow of the coolant in the coolant flow path of the motor case.

According to this construction, the heat radiating portion can be efficiently cooled (heat exchange) without blocking the flow of the coolant since the heat radiating portion extends along the flow of the coolant flowing in the coolant flow path of the motor case.

The coolant flow path may be substantially circularly provided in an outer peripheral edge portion of the motor case; and the heat sink may include an arcuate mounting portion to be fixed to a mount portion provided on the outer peripheral edge portion of the motor case.

Furthermore, the heat radiating portion may be substantially arcuately provided on a surface of the mounting portion substantially facing or opposed to the mount portion.

According to the above, the heat radiating portion can be cooled without increasing the number of members and complicating the structure of the heat sink since the heat radiating portion is provided on the surface of the mounting portion facing the mount portion.

The insulation plate may be made of synthetic resin particularly having a content of glass and talc of more than about 50%.

The nut portion may be arranged to be offset from an arrangement position of the heat radiating portion in a direction away from an axis center of the motor body.

Furthermore, a part of a placing surface of the heat sink located closer to the axis center of the motor body than the nut portion may be exposed.

According to the above, heat generated from the motor body is cooled by the placing surface of the heat sink cooled by the heat radiating portion when being transferred to the nut via a space between the motor and the nut. Thus, the mount of heat transferred from the motor body to the nut can be suppressed as compared with the case where the placing surface is covered by the nut without the nut being offset.

The heat radiating portion may be or may comprise a cooling fin projecting from the back wall of an arcuate recess formed in the heat sink.

Furthermore, the projecting end of the cooling fin may be located in the recess os substantially flush therewith.

According to the above, heat radiation performance of the heat radiating portion can be improved since the surface area can be increased as compared with the case where the heat sink merely includes a recess. Further, by providing the cooling fin in the recess, the height of the heat sink can be reduced while substantially maintaining the surface area as compared with the case where the cooling fin is formed to project from the surface of the heat sink. Consequently, the cooling fin can be provided without enlarging the terminal block. Further, since the cooling fin is arranged in the recess, breakage of the cooling fin such as due to contact with other members during transportation can be prevented as compared with the case where the cooling fin is projecting from the recess.

When the mounting portion is fixed to a mount portion of the motor case, the heat radiating portion substantially may be set to be arranged in the mounting portion in an area corresponding to a coolant supply/discharge hole formed in the coolant flow path of the motor case.

A molded resin portion may be provided which includes one or more covering portions which at least partly cover one or more recesses of the mounting portion of the heat sink.

The heat radiating portion may be arranged before a mounting surface of the mounting portion.

According to another aspect of the invention, there is provided a motor comprising a motor case which houses a motor body and includes a coolant flow path; and a terminal block according to the invention or a particular embodiment thereof fixed to the motor case.

According to another aspect of the invention, there is provided a method of fixing a terminal block as defined in independent claim 14.

According to the above, it is possible to improve heat radiation performance of a heat sink without increasing the number of members.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a front view showing a state where a terminal block is fixed to a motor case,
FIG.2 is a perspective view of the terminal block when viewed from front,
FIG. 3 is a front view of the terminal block,
FIG. 4 is a plan view of the terminal block,
FIG. 5 is a rear view corresponding to the state where the terminal block is fixed to the motor case,
FIG. 6 is a perspective view of the terminal block when viewed from behind, and
FIG. 7 is a section corresponding to the state where the terminal block is fixed to the motor case.

### <Embodiment>

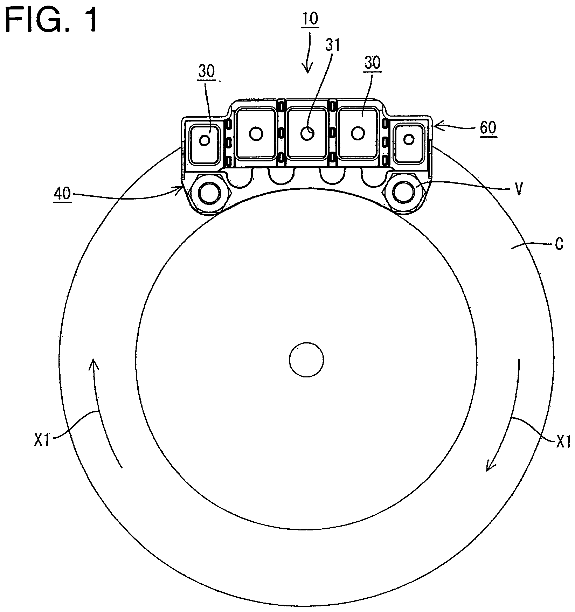

One particular embodiment of the present invention is described with reference to FIGS. 1 to 7.

In this embodiment is illustrated a terminal block 10 to be mounted on a (particularly substantially cylindrical) motor case C at least partly housing a motor body (particularly of a three-phase alternating current motor) installed in a vehicle such as an electric vehicle or a hybrid vehicle as shown in FIG. 1. Note that a coolant flow path C1 in which cooling water or fluid (as an example of a "coolant") for cooling the unillustrated motor body can be circulated is provided in an outer peripheral edge portion of the motor case C. The coolant flow path C1 particularly substantially is circularly provided to cover the outer peripheral surface of the motor body over the entire circumference, and/or the cooling water substantially is circulated in a circumferential direction X1 about an axis center of the motor body.

Further, this terminal block 10 particularly electrically connects one or more busbars, particularly a three-pole busbar (as an example of a "conductive member") provided in the unillustrated three-phase alternating current motor and a three-pole busbar (as an example of a "conductive member") provided in an unillustrated inverter.

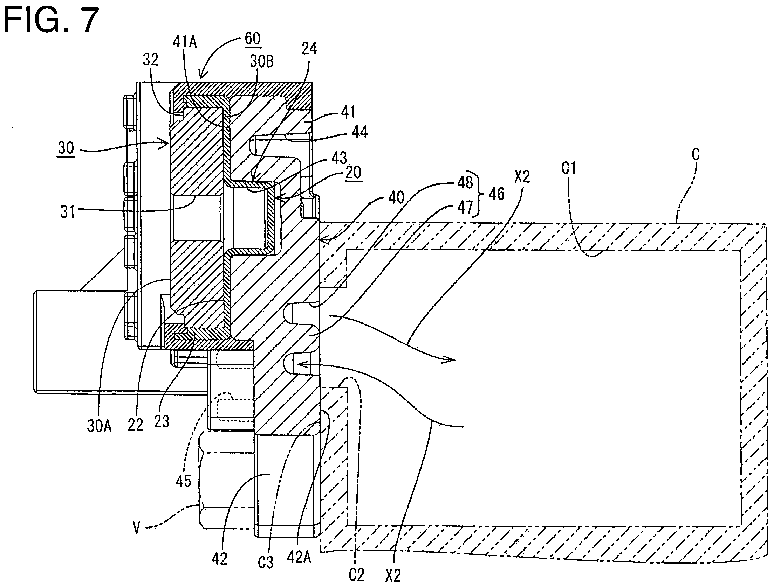

As shown in FIG. 7, the terminal block 10 includes one or more, particularly a plurality of nuts 30 (as an example of a "nut portion") on which the above busbars are to be placed, a heat sink 40 arranged at a rear side of the nuts 30 substantially opposite to a front side where the one or more busbars are to be placed, an insulation plate 20 made e.g. of synthetic resin and at least partly sandwiched between the nut(s) 30 and the heat sink 40 from opposite front and rear sides, and a molded resin portion 60 made e.g. of synthetic resin and at least partly covering these three members 30, 20 and 40. Note that, in the following description, a vertical direction is based on FIG. 1 and forward and backward directions are based on lateral directions in FIG. 7, wherein a side to be mounted on the motor case (right side in FIG. 7) is referred to as a rear side.

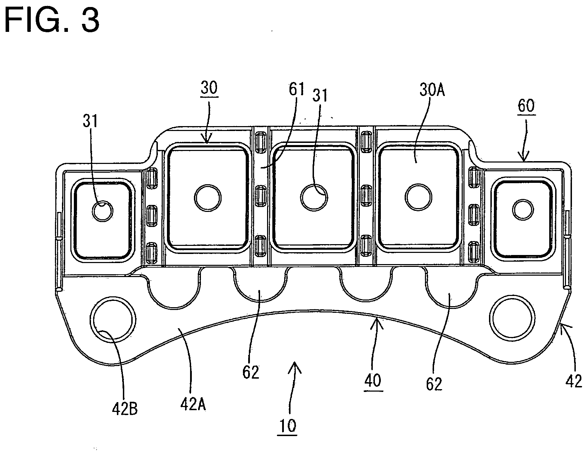

Each nut 30 particularly substantially is in the form of a metal block and has a substantially rectangular or polygonal plan view with e.g. four rounded corners as shown in FIGS. 3 and 7. A plurality of (five in this embodiment) nuts 30 are arranged in the lateral direction. A bolt fastening hole 31 penetrating in forward and backward directions is formed substantially in an intermediate part (particularly substantially in a central part) of the nut 30. An unillustrated bolt is threadably engaged with the bolt fastening hole 31 to electrically connect the busbars after a plurality of unillustrated busbars are placed on a front fastening surface 30A of the nut 30.

A stepped portion 32 at least partly is formed on an outer peripheral part of a front end portion of the nut 30. This stepped portion 32 particularly is formed to be displaced slightly backward from the front fastening surface 30A of the nut 30. Further, the front fastening surface 30A, a rear fastening surface 30B and the stepped portion 32 of the nut 30 particularly substantially are formed to be even and flat.

The insulation plate 20 is made e.g. of synthetic resin and so formed that the nut(s) 30 can be at least partly accommodated therein as shown in FIG. 7. Further, the insulation plate 20 can at least partly accommodate the one or more, particularly the plurality of nuts 30 (particularly substantially arranged in the lateral direction). The insulation plate 20 includes a bottom plate 22 with which the rear fastening surfaces 30B of the nut(s) 30 can be held in close contact, one or more surrounding walls 23 extending forward from the bottom plate 22 to at least partly surround the side surface(s) of the respective nut(s) 30 (particularly substantially over the entire circumference(s)), and one or more bolt escaping recesses 24 projecting backward from the bottom plate 22.

The front and rear surfaces of the bottom plate 22 particularly substantially are formed to be flat, so that the front surface of the bottom plate 22 and the rear fastening surfaces 30B of the nut(s) 30 can be held in close contact with each other when the nut(s) 30 is/are accommodated.

The insulation plate 20 is made e.g. of synthetic resin particularly having a content of glass and talc of more than about 50% (e.g. of about 66 %) and has higher thermal conductivity and is less likely to be warped after molding as compared with synthetic resin having a content of glass and talc of about 33 %. This makes the bottom plate 22 of the insulation plate 20 more easily held in close contact with the nuts 30.

The inner peripheral shape of each surrounding wall 23 particularly substantially conforms to the outer peripheral shape of the nut 30. The surrounding wall 23 positions the nut 30 at a proper position as shown in FIG. 7 when the nut 30 is accommodated into insulation plate 20.

Each bolt escaping recess 24 makes an opening in the front surface of the bottom plate 22 and projects backward as shown in FIG. 7. Further, the bolt escaping recess 24 is arranged substantially coaxially with the bolt fastening hole 31 of the nut 30, so that interference of the leading end of the bolt with the bottom plate 22 of the insulation plate 20 can be prevented even if the bolt is threadably engaged with the bolt fastening hole 31 to penetrate through the bolt fastening hole 31.

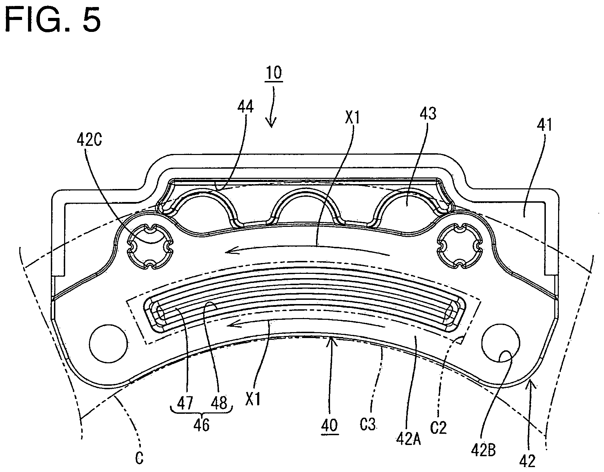

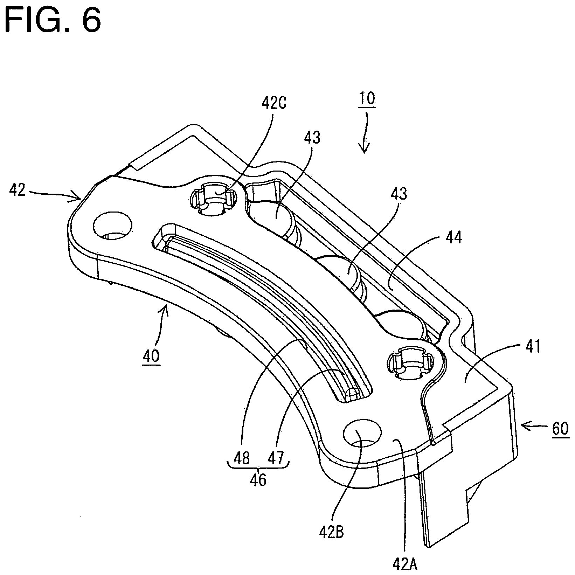

The heat sink 40 particularly is made of aluminum die-cast (or of a material having a high thermal capacity and/or thermal heat conductivity) and/or shaped to be laterally long as shown in FIGS. 5 and 6. As shown in FIG. 7, an upper part (first part) of the heat sink 40 serves as a sink body 41 on which the insulation plate 20 is to be placed, and a lower part (second part) of the heat sink 40 serves as a mounting portion 42 integrally formed to the lower side of the sink body 41.

The front surface of the sink body 41 particularly substantially is flat and/or serves as a placing surface 41A on which the insulation plate 20 is to be placed. Further, the placing surface 41A particularly is polished to be substantially free from unevenness or roughness. This makes the rear surface of the bottom plate 22 of the insulation plate 20 and the front surface of the sink body 41 easily held in close contact with each other as shown in FIG. 7. That is, heat transferred to the nut(s) 30 from the busbar(s) can be efficiently transferred to the sink body 41 via the bottom plate 22 of the insulation plate 20.

As shown in FIG. 7, one or more accommodating recesses 43 which are open forward are formed in the front surface of the sink body 41. These one or more accommodating recesses 43 particularly are recesses substantially extending backward from the front surface of the sink body 41. Each accommodating recess 43 particularly has a hole diameter substantially equal to the outer diameter of the bolt escaping recess 24 of the insulation plate 20 and the bolt escaping recess 24 at least partly is fittable or insertable into the accommodating recess 43. Accordingly, the insulation plate 20 and the heat sink 40 can be positioned with respect to each other and the insulation plate 20 can be assembled with the sink body 41 by fitting the respective bolt escaping recess(es) 24 of the insulation plate 20 into the respective accommodating recess(es) 43. That is, the nuts 30 particularly are arranged adjacent to an intermediate part (preferably particularly above a central part) of the heat sink 40 in the vertical direction and offset in a direction away from the axis center of the motor body.

As shown in FIGS. 6 and 7, at least one sink-side recess 44 recessed forward from the back side particularly is provided in an intermediate part (particularly substantially in a central part) of the rear surface of the sink body 41. One or more substantially cylindrical accommodating recesses 43 project backward from the back wall of this sink-side recess 44.

As shown in FIG. 5, the mounting portion 42 is to be fixed to a mount portion C3 provided on the outer peripheral edge portion of the motor case C. The mounting portion 42 particularly has a substantially arcuate shape extending in the lateral direction substantially in conformity with the outer peripheral shape of the motor case C as a whole. As shown in FIGS. 6 and 7, the rear surface of the mounting portion 42 serves as a mounting surface 42A which is a substantially flat surface located slightly behind the rear surface of the sink body 41 and/or to be fixed to the motor case C. Further, one or more positioning holes 42C extending forward from the rear side are provided at one or more positions (e.g. two positions on opposite lateral sides of an upper part of the mounting surface 42A). One or more unillustrated positioning pins projecting forward from the mount portion C3 of the motor case C are fittable into respective ones of these one or more positioning holes 42C. By at least partly fitting the positioning pins into the positioning holes 42C, the mounting portion 42 is positioned with respect to the mount portion C3 of the motor case.

One or more vertically penetrating bolt insertion holes 42B are provided adjacent to (particularly at substantially opposite lateral sides of) the mounting portion 42. One or more fixing bolts V are to be at least partly inserted into these bolt insertion holes 42B and tightened to the motor case C after the mounting surface 42A of the mounting portion 42 substantially is brought into contact with the mount portion C3 of the motor case C, whereby the terminal block 10 is fixed to the motor case C as shown in FIG. 1. Note that the coolant flow path C1 is arranged at the inner side of the mount portion C3 in the motor case C and cooled cooling water is circulated in the circumferential direction X1.

Further, one or more circular recesses 45 substantially extending forward are provided in the front end surface of the mounting portion 42.

As shown in FIG. 7, the molded resin portion 60 is integrally or unitarily shaped to cover parts of the plurality of nuts 30 arranged in the lateral direction, the insulation plate 20 and/or the heat sink 40 with the one or more nuts 30, the insulation plate 20 and the heat sink 40 assembled with each other. Further, the molded resin portion 60 is formed to at least partly cover the sink body 41 of the heat sink 40. The molded resin portion 60 is formed to at least partly cover the stepped portions 32 of the nuts 30 and front end portions of the surrounding walls 23 of the insulation plate 20 and/or (particularly also) at least partly cover an outer peripheral edge portion of the rear side of the sink body 41 of the heat sink 40. This causes the nuts 30 and the insulation plate 20 to be held in close contact in forward and backward directions and/or causes the insulation plate 20 and the heat sink 40 to be held in close contact in forward and backward directions.

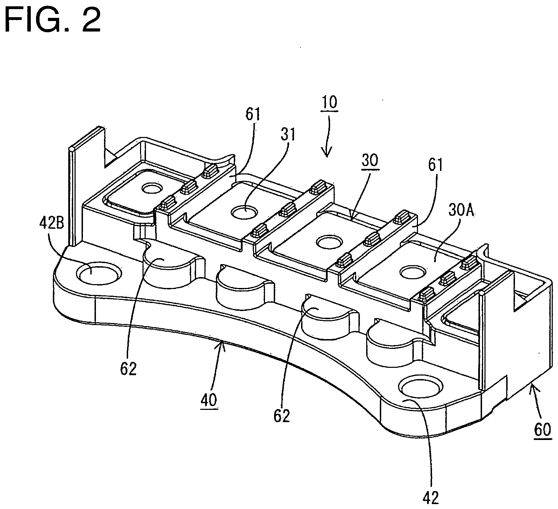

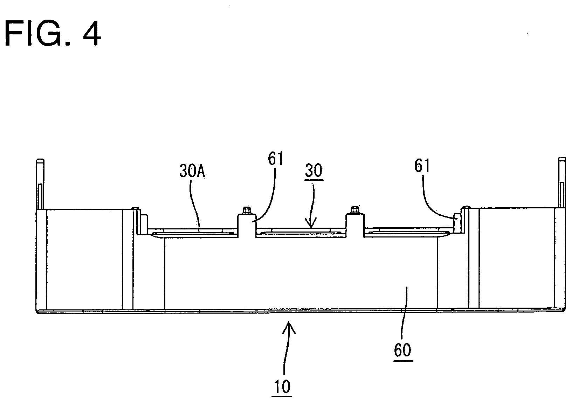

As shown in FIGS. 2 and 4, the molded resin portion 60 includes one or more partition walls 61 partitioning between adjacent nuts 30. These partition walls 61 are formed to substantially project forward from the front surfaces of the busbar(s) placed on the front fastening surface(s) 30A of the nut 30 and fastened by the bolt(s). This particularly prevents the busbars from coming into contact with each other to cause a short circuit due to lateral movements of the busbars fastened to the nuts 30.

The molded resin portion 60 also includes one or more covering portions 62 which at least partly cover the circular recesses 45 of the mounting portion 42 of the heat sink 40 from before. These covering portions 62 particularly substantially are formed to fill up the interiors of the circular recesses 45 and/or substantially cover all the upper and side surfaces of the circular recesses 45, thereby improving a degree of close contact between the molded resin portion 60 and the heat sink 40. On the other hand, parts of the front surface of the mounting portion 42 other than the circular recesses 45 at least partly are exposed from the molded resin portion 60. That is, parts of the front surface of the mounting portion 42, which are located closer to the axis center of the motor body than the nuts 30, at least partly are exposed.

At least one heat radiating portion 46 is provided on the rear surface of the mounting portion 42.

As shown in FIG. 5, this heat radiating portion 46 particularly substantially has an arcuate shape and/or particularly is formed to be smaller (particularly one size smaller) than an arcuate coolant supply/discharge hole C2 provided in the mount portion C3 of the motor case C. As shown in FIG. 5, the coolant supply/discharge hole C2 is formed in the coolant flow path C1 of the motor case C substantially along the flow of the cooling water circulating in the circumferential direction X1 in the coolant flow path C1, and the cooling water circulating in the coolant flow path C1 flows, for example, in a direction X2 substantially between a recess 48 and the coolant flow path C1 via the coolant supply/discharge hole C2 as shown in FIG. 7. When the mounting portion 42 is fixed to the mount portion C3 of the motor case C, the heat radiating portion 46 particularly substantially is set to be arranged in an area corresponding to the coolant supply/discharge hole C2 in the mounting portion 42. In this way, the heat radiating portion 46 is cooled (heat exchange) by the cooling water circulating in the coolant flow path C1 of the motor case C, and a heat radiation effect from the heat sink can be improved as compared with heat radiation from the heat sink via a heat transfer member such as a heat radiation sheet and air-cooled heat radiation.

Since particularly substantially having an arcuate shape along the flow of the cooling water circulating in the circumferential direction X1 in the coolant flow path C1, the heat radiating portion 46 can be efficiently cooled without blocking or hindering the flow of the cooling water. Note that an unillustrated seal member particularly is mounted on an outer peripheral edge portion of the heat radiating portion 46 to provide fluid- or liquid-tight sealing between the motor case C and the mounting portion 42.

As shown in FIGS. 6 and 7, the heat radiating portion 46 particularly is the arcuate recess 48 including a cooling fin 47 inside.

The recess 48 is recessed forward from the rear side, and the cooling fin 47 projecting backward is formed on the back wall of the recess 48. Since the surface area of the heat radiating portion can be increased as compared with the case of merely providing a recess, heat radiation performance of the heat radiating portion can be improved.

Specifically, the cooling fin 47 substantially is rounded as a whole and/or substantially has an arcuate shape in conformity with the shape of the recess 48 substantially in a vertical central part of the recess 48. The length of the cooling fin 47 in the lateral direction particularly is somewhat shorter than that of the recess 48 in the lateral direction, and/or the opposite lateral ends of the cooling fin 47 are separated from the inner surface of the recess 48. Further, the projecting end of the cooling fin 47 particularly substantially is flush with the mounting surface 42A of the mounting portion 42. That is, the cooling fin 47 is completely accommodated in the recess 48. This enables the length of the heat sink 40 in forward and backward directions to be shortened while substantially maintaining the surface area as compared with the case where the cooling fin 47 projects from the rear end surface of the mounting portion 42. Consequently, this contributes to miniaturization of the terminal block 10.

Since the cooling fin 47 particularly is arranged in the recess 48, breakage such as due to contact with other members can be reduced as compared with the case where the cooling fin 47 is projecting.

Further, since the heat radiating portion 46 particularly is arranged before the mounting surface 42A of the mounting portion 42, the terminal block 10 can also serve as a terminal block which is fixed to a motor case by attaching a heat radiation sheet to the mounting surface 42A. This can reduce production cost as compared with the case of separately producing a terminal block using a heat radiation sheet and a terminal block using cooling water.

Further, since the heat radiating portion 46 particularly is provided on the mounting surface 42A of the mounting portion 42, the heat sink 40 can be cooled without increasing the number of members and complicating the structure of the heat sink 40.

Since the mounting portion 42 particularly is cooled by the heat radiating portion 46 and/or particularly arranged to be offset upward from the substantially vertical central part of the heat sink 40, an exposed peripheral part of the mounting portion 42 is cooled. That is, heat generated from the motor body is cooled by the mounting portion 42 when being transferred to the nuts 30 via a space lateral to the motor case C. In this way, the amount of heat transferred from the motor body to the nuts 30 can be suppressed as compared with the case where the front surface of the mounting portion 42 is covered by the nuts 30 without the nuts 30 being offset upward.

Accordingly, to improve heat radiation performance of a heat sink without increasing the number of members, a terminal block 10 to be fixed to a motor case C which houses a motor body and includes a coolant flow path C1 and adapted to fasten one or more busbars by tightening one or more bolts includes one or more nuts 30 for tightening the one or more bolts, and a heat sink 40 made of aluminum die-cast and held in close contact with the nut(s) 30 via an insulation plate 20 behind the nut(s) 30. The heat sink 40 includes at lest one heat radiating portion 46 which comes into contact with coolant (e.g. cooling water) passing in the coolant flow path C1 of the motor case C.

### <Other Embodiments>

The present invention is not limited to the above described and illustrated embodiment. For example, the following embodiments are also included in the technical scope of the present invention.
(1) Although the heat radiating portion 46 is formed on the rear surface of the mounting portion 42 in the above embodiment, the present invention is not limited to such a mode and the heat radiating portion 46 may be formed, for example, on the rear surface of the sink body 41.
(2) Although five nuts 30 are arranged in the lateral direction in the above embodiment, the present invention is not limited to such a mode and, for example, one, two, three or four nuts may be arranged.
(3) Although the coolant flow path C1 is circularly provided in the outer peripheral edge portion of the motor case, the present invention is not limited to such a mode and, for example, the coolant flow path may be substantially arcuately provided in the outer peripheral edge portion of the motor case.
(4) Although the nut portion is the nut 30 held in such a manner as not to fall off by having the stepped portion 32 at least partly covered by the molded resin portion 60 in the above embodiment, the present invention is not limited to such a mode and the nut portion may be, for example, a nut held in such a manner as not to fall off by being press-fitted into the insulation plate 20 or the molded resin portion 60.
(5) Although the heat sink 40 particularly is made of aluminum or aluminum die-cast in the above embodiment, the present invention is not limited to such a mode and the heat sink 40 may be, for example, made of heat transferrable metal such as copper.
(6) Although the mounting portion 42 is fixed to the outer peripheral edge portion of the motor case C in the above embodiment, the present invention is not limited to such a mode and the mounting portion 42 may be, for example, fixed to a cooling water supply path for supplying the cooling water to the coolant flow path C1 of the motor case C.

### LIST OF REFERENCE NUMERALS

- 10:: terminal block
- 20:: insulation plate
- 30:: nut (nut portion)
- 40:: heat sink
- 42:: mounting portion
- 42A:: mounting surface
- 46:: heat radiating portion
- 47:: cooling fin
- 48:: arcuate recess
- 60:: molded resin portion
- 62:: covering portion
- C:: motor case
- C1:: coolant flow path
- C3:: mount portion

## Claims

1. A terminal block (10) to be fixed to a motor case (C) which houses a motor body and includes a coolant flow path (C1) and adapted to fasten at least one conductive member by tightening at least one bolt, comprising:
at least one nut portion (30) for tightening the bolt; and
a metal heat sink (40) provided such that heat can be transferred from the nut portion (30);
wherein the heat sink (40) includes at least one heat radiating portion (46) which comes into contact with a coolant passing in the coolant flow path (C1) of the motor case (C); and
**characterized in that**
the nut portion (30) is arranged via an insulation plate (20) made of synthetic resin on a placing surface (41A) of the heat sink (40) at a side opposite to a side where the heat radiating portion (46) is formed, wherein the insulation plate (20) is at least partly sandwiched between the nut portion (30) and the heat sink (40) from opposite front and rear sides.

2. A terminal block according to claim 1, wherein the heat radiating portion (46) is formed to extend along the flow of the coolant in the coolant flow path (C1) of the motor case (C).

3. A terminal block according to any one of the preceding claims, wherein:
the coolant flow path (C1) is circularly provided in an outer peripheral edge portion of the motor case (C); and
the heat sink (40) includes an arcuate mounting portion (42) to be fixed to a mount portion (C3) provided on the outer peripheral edge portion of the motor case (C).

4. A terminal block according to claim 3, wherein the heat radiating portion (46) is substantially arcuately provided on a surface of the mounting portion (42) substantially facing the mount portion (C3).

5. A terminal block according to claim 1, wherein the insulation plate (20) is made of synthetic resin having a content of glass and talc of more than about 50%.

6. A terminal block according to any one of the preceding claims, wherein the nut portion (30) is arranged to be offset from an arrangement position of the heat radiation portion (46) in a direction away from an axis center of the motor body.

7. A terminal block according to any one of the preceding claims, wherein the heat radiating portion (46) comprises a cooling fin (47) projecting from the back wall of an arcuate recess (48) formed in the heat sink (40).

8. A terminal block according to claim 7, wherein the projecting end of the cooling fin (47) is located in the recess (48) or flush therewith.

9. A terminal block according to any one of the preceding claims, wherein a molded resin portion (60) is provided which includes one or more covering portions (62) which at least partly cover one or more recesses (45) of the mounting portion (42) of the heat sink (40).

10. A terminal block according to claim 9, wherein a part of the placing surface (41A) of the heat sink (40), which is located closer to the axis center of the motor body than the nut portion (30), is exposed from the molded resin portion (60).

11. A terminal block according to any one of the preceding claims, wherein the heat radiating portion (46) is provided on a mounting surface (42A) of the mounting portion (42).

12. A motor comprising:
a motor case (C) which houses a motor body and includes a coolant flow path (C1); and
a terminal block (10) according to any one of the preceding claims fixed to the motor case (C).

13. A motor according to claim 12, wherein the mounting portion (42) is fixed to a mount portion (C3) of the motor case (C), and the heat radiating portion (46) substantially is set to be arranged in the mounting portion (42) in an area corresponding to a coolant supply/discharge hole (C2) formed in the coolant flow path (C1) of the motor case (C).

14. A method of fixing a terminal block (10) to a motor case (C) which houses a motor body and includes a coolant flow path (C1), comprising the following steps:
providing a terminal block (10) having at least one nut portion (30) for tightening at least one bolt;
arranging a metal heat sink (40) such that heat can be transferred from the nut portion (30) and fixing the metal heat sink (40) to the motor case (C), wherein the heat sink (40) includes at least one heat radiating portion (46) which comes into contact with a coolant passing in the coolant flow path (C1) of the motor case (C); and
fastening at least one conducting member by tightening the at least one bolt,
**characterized in that**
the nut portion (30) is arranged via an insulation plate (20) made of synthetic resin on a placing surface of the heat sink (40) at a side opposite to a side where the heat radiating portion (46) is formed, wherein the insulation plate (20) is at least partly sandwiched between the nut portion (30) and the heat sink (40) from opposite front and rear sides.

## Patentansprüche

1. Reihenklemme (10) zum Befestigen an einem Motorgehäuse (C), das einen Motorkörper beherbergt und einen Kühlmittelströmungsweg (C1) umfasst und angepasst ist, mindestens ein leitendes Element durch Anziehen mindestens eines Bolzens zu fixieren, umfassend:
mindestens einen Mutternabschnitt (30) zum Anziehen des Bolzens; und einen metallischen Kühlkörper (40), der bereitgestellt ist, sodass Wärme von dem Mutternabschnitt (30) übertragen werden kann;
wobei der Kühlkörper (40) mindestens einen wärmeabstrahlenden Abschnitt (46) umfasst, der in Kontakt mit einem Kühlmittel gelangt, das in dem Kühlmittelströmungsweg (C1) des Motorgehäuses (C) vorbeiströmt; und
**dadurch gekennzeichnet, dass**
der Mutternabschnitt (30) über eine Isolierplatte (20) aus Kunstharz an einer Anordnungsfläche (41A) des Kühlkörpers (40) an einer Seite, die einer Seite gegenüberliegt, an der der wärmeabstrahlende Abschnitt (46) gebildet ist, angeordnet ist, wobei die Isolierplatte (20) mindestens teilweise von gegenüberliegenden Vorder- und Rückseiten zwischen dem Mutternabschnitt (30) und dem Kühlkörper (40) eingeschichtet ist.

2. Reihenklemme nach Anspruch 1, wobei der wärmeabstrahlende Abschnitt (46) so gebildet ist, dass er sich entlang der Strömung des Kühlmittels in dem Kühlmittelströmungsweg (C1) des Motorgehäuses (C) erstreckt.

3. Reihenklemme nach einem beliebigen der vorhergehenden Ansprüche, wobei:
der Kühlmittelströmungsweg (C1) kreisförmig in einem äußeren Umfangsrandabschnitt des Motorgehäuses (C) bereitgestellt ist; und
der Kühlkörper (40) einen gebogenen Befestigungsabschnitt (42) zum Befestigen an einem Montageabschnitt (C3), der an dem äußeren Umfangsrandabschnitt des Motorgehäuses (C) bereitgestellt ist, umfasst.

4. Reihenklemme nach Anspruch 3, wobei der wärmeabstrahlende Abschnitt (46) im Wesentlichen gebogen auf einer Oberfläche des Befestigungsabschnitts (42) im Wesentlichen dem Montageabschnitt (C3) zugewandt, bereitgestellt ist.

5. Reihenklemme nach Anspruch 1 wobei die Isolierplatte (20) aus Kunstharz hergestellt ist, das einen Glas- und Talkumanteil von mehr etwa 50 % aufweist.

6. Reihenklemme nach einem beliebigen der vorhergehenden Ansprüche, wobei der Mutternabschnitt (30) so angeordnet ist, dass er zu einer Anordnungsposition des wärmeabstrahlenden Abschnitts (46) in einer Richtung, die von einer Achsenmitte des Motorkörpers weggerichtet ist, versetzt ist.

7. Reihenklemme nach einem der vorhergehenden Ansprüche, wobei der wärmeabstrahlende Abschnitt (46) eine Kühlrippe (47) umfasst, die von der Rückwand einer bogenförmigen Vertiefung (48), die in dem Kühlkörper (40) gebildet ist, hervorsteht.

8. Reihenklemme nach Anspruch 7, wobei das hervorstehende Ende der Kühlrippe (47) in der Vertiefung (48) angeordnet oder damit bündig ist.

9. Reihenklemme nach einem beliebigen der vorhergehenden Ansprüche, wobei ein Formharzabschnitt (60) bereitgestellt ist, der einen oder mehrere Abdeckabschnitte (62) umfasst, die mindestens teilweise eine oder mehrere Vertiefungen (45) des Befestigungsabschnitts (42) des Kühlkörpers (40) abdecken.

10. Reihenklemme nach Anspruch 9, wobei ein Teil der Anordnungsfläche (41A) des Kühlkörpers (40), der näher an der Achsenmitte des Motorkörpers liegt als der Mutternabschnitt (30), von dem Formharzabschnitt (60) freigelegt ist.

11. Reihenklemme nach einem beliebigen der vorhergehenden Ansprüche, wobei der wärmeabstrahlende Abschnitt (46) auf einer Befestigungsfläche (42A) des Befestigungsabschnitts (42) angeordnet ist.

12. Motor, umfassend:
ein Motorgehäuse (C), das einen Motorkörper beherbergt und einen Kühlmittelströmungsweg (C1) umfasst; und
eine Reihenklemme (10) nach einem beliebigen der vorhergehenden Ansprüche, die an dem Motorgehäuse (C) befestigt ist.

13. Motor nach Anspruch 12, wobei der Befestigungsabschnitt (42) an einem Montageabschnitt (C3) des Motorgehäuses (C) befestigt ist, und der wärmeabstrahlende Abschnitt (46) im Wesentlichen eingerichtet ist, um in dem Befestigungsabschnitt (42) in einem Bereich, der einer Kühlmittelzufuhr-/Auslassöffnung (C2) entspricht, die in dem Kühlmittelströmungsweg (C1) des Motorgehäuses (C) gebildet ist, angeordnet zu werden.

14. Verfahren zum Befestigen einer Reihenklemme (10) an einem Motorgehäuse (C), das einen Motorkörper beherbergt und einen Kühlmittelströmungsweg (C1) umfasst, wobei das Verfahren die folgenden Schritte umfasst:
Bereitstellen einer Reihenklemme (10), die mindestens einen Mutternabschnitt (30) zum Anziehen von mindestens einem Bolzen aufweist;
Anordnen eines metallischen Kühlkörpers (40), sodass Wärme von dem Mutternabschnitt (30) übertragen werden kann und Befestigen des metallischen Kühlkörpers (40) an dem Motorgehäuse (C),
wobei der Kühlkörper (40) mindestens einen wärmeabstrahlenden Abschnitt (46) umfasst, der in Kontakt mit einem Kühlmittel gelangt, das in dem Kühlmittelströmungsweg (C1) des Motorgehäuses (C) vorbeiströmt; und
Fixieren von mindestens einem leitenden Element durch Anziehen des mindestens einen Bolzens,
**dadurch gekennzeichnet, dass**
der Mutternabschnitt (30) über eine Isolierplatte (20) aus Kunstharz an einer Anordnungsfläche des Kühlkörpers (40) an einer Seite, die einer Seite gegenüberliegt, an der der wärmeabstrahlende Abschnitt (46) gebildet ist, angeordnet ist, wobei die Isolierplatte (20) mindestens teilweise von gegenüberliegenden Vorder- und Rückseiten zwischen dem Mutternabschnitt (30) und dem Kühlkörper (40) eingeschichtet ist.

## Revendications

1. Bornier (10) à fixer à un carter de moteur (C) qui loge un corps de moteur et inclut un trajet d'écoulement de liquide de refroidissement (C1) et est apte à attacher au moins un élément conducteur par serrage d'au moins un boulon, comportant :
au moins une portion d'écrou (30) afin de serrer le boulon ; et
un dissipateur thermique métallique (40) prévu de sorte que de la chaleur puisse être transférée à partir de la portion d'écrou (30) ;
dans lequel le dissipateur thermique (40) inclut au moins une portion de rayonnement de chaleur (46) qui entre en contact avec un liquide de refroidissement passant dans le trajet d'écoulement de liquide de refroidissement (C1) du carter de moteur (C) ; et
**caractérisé en ce que**
la portion d'écrou (30) est agencée par le biais d'une plaque d'isolation (20) constituée de résine synthétique sur une surface de placement (41A) du dissipateur thermique (40) au niveau d'un côté opposé à un côté où la portion de rayonnement de chaleur (46) est constituée, dans lequel la plaque d'isolation (20) est au moins partiellement enserrée entre la portion d'écrou (30) et le dissipateur thermique (40) à partir de côtés avant et arrière opposés.

2. Bornier selon la revendication 1, dans lequel la portion de rayonnement de chaleur (46) est constituée afin de s'étendre le long de l'écoulement du liquide de refroidissement dans le trajet d'écoulement de liquide de refroidissement (C1) du carter de moteur (C).

3. Bornier selon l'une quelconque des revendications précédentes, dans lequel :
le trajet d'écoulement de liquide de refroidissement (C1) est prévu de façon circulaire dans une portion de bord périphérique extérieur du carter de moteur (C) ; et
le dissipateur thermique (40) inclut une portion de montage (42) arquée à fixer sur une portion de montant (C3) prévue sur la portion de bord périphérique extérieur du carter de moteur (C).

4. Bornier selon la revendication 3, dans lequel la portion de rayonnement de chaleur (46) est prévue sensiblement arquée sur une surface de la portion de montage (42) faisant sensiblement face à la portion de montant (C3).

5. Bornier selon la revendication 1, dans lequel la plaque d'isolation (20) est constituée de résine synthétique ayant une teneur en verre et en talc de plus de 50 % environ.

6. Bornier selon l'une quelconque des revendications qui précèdent, dans lequel la portion d'écrou (30) est agencée pour être décalée d'une position d'agencement de la portion de rayonnement de chaleur (46) dans une direction s'éloignant d'un axe central du corps de moteur.

7. Bornier selon l'une quelconque des revendications qui précèdent, dans lequel la portion de rayonnement de chaleur (46) comporte une ailette de refroidissement (47) faisant saillie à partir de la paroi arrière d'un évidement arqué (48) constitué dans le dissipateur thermique (40).

8. Bornier selon la revendication 7, dans lequel l'extrémité saillante de l'ailette de refroidissement (47) est située dans l'évidement (48) ou affleure avec celui-ci.

9. Bornier selon l'une quelconque des revendications qui précèdent, dans lequel est prévue une portion en résine moulée (60), laquelle inclut une ou plusieurs portions de recouvrement (62) qui couvrent au moins partiellement un ou plusieurs évidements (45) de la portion de montage (42) du dissipateur thermique (40).

10. Bornier selon la revendication 9, dans lequel une partie de la surface de placement (41A) du dissipateur thermique (40), qui est située plus près de l'axe central du corps de moteur que la portion d'écrou (30), est exposée à partir de la portion en résine moulée (60).

11. Bornier selon l'une quelconque des revendications qui précèdent, dans lequel la portion de rayonnement de chaleur (46) est dotée d'une surface de montage (42A) de la portion de montage (42).

12. Moteur comportant :
un carter de moteur (C) qui loge un corps de moteur et inclut un trajet d'écoulement de liquide de refroidissement (C1) ; et
un bornier (10) selon l'une quelconque des revendications qui précèdent fixé au carter de moteur (C).

13. Moteur selon la revendication 12, dans lequel la portion de montage (42) est fixée à une portion de montant (C3) du carter de moteur (C) et la portion de rayonnement de chaleur (46) est sensiblement définie pour être agencée dans la portion de montage (42) dans une zone correspondant à un orifice d'alimentation/évacuation de liquide de refroidissement (C2) constitué dans le trajet d'écoulement de liquide de refroidissement (C1) du carter de moteur (C).

14. Procédé de fixation d'un bornier (10) à un carter de moteur (C) qui loge un corps de moteur et inclut un trajet d'écoulement de liquide de refroidissement (C1), comportant les étapes suivantes :
la fourniture d'un bornier (10) ayant au moins une portion d'écrou (30) afin de serrer au moins un boulon ;
l'agencement d'un dissipateur thermique métallique (40) de sorte que de la chaleur puisse être transférée à partir de la portion d'écrou (30) et la fixation du dissipateur thermique métallique (40) sur le carter de moteur (C), dans lequel le dissipateur thermique (40) inclut au moins une portion de rayonnement de chaleur (46) qui entre en contact avec un liquide de refroidissement passant dans le trajet d'écoulement de liquide de refroidissement (C1) du carter de moteur (C) ; et
l'attache d'au moins un élément conducteur par serrage du au moins un boulon,
**caractérisé en ce que**
la portion d'écrou (30) est agencée par le biais d'une plaque d'isolation (20) constituée de résine synthétique sur une surface de placement du dissipateur thermique (40) au niveau d'un côté opposé à un côté où est constituée la portion de rayonnement de chaleur (46), dans lequel la plaque d'isolation (20) est au moins partiellement enserrée entre la portion d'écrou (30) et le dissipateur thermique (40) à partir de côtés avant et arrière opposés.
